# EUROPEAN PATENT SPECIFICATION

(11) **EP 2 690 841 B1**
(45) Date of publication and mention of the grant of the patent: **27.04.2016**
(21) Application number: 13175700.7
(22) Date of filing: 09.07.2013
(51) Int. Cl.: H04L 29/06, H04L 29/08, H04L 29/14, G07B 17/00

(54) **Method and system for multiple servers to share a postal security device**
Verfahren und System für mehrere Server zur gemeinsamen Nutzung eines Post-Sicherheitsdienstes
Procédé et système pour de multiples serveurs permettant de partager un dispositif de sécurité d'affranchissement

(30) Priority: 26.07.2012 US 201213558406
(43) Date of publication of application: 29.01.2014
(73) Proprietor: Pitney Bowes Inc., Stamford, CT 06926 (US)
(72) Inventor: Monroe, George T., Seymour, CT Connecticut 06483 (US)
(74) Representative: Hoffmann Eitle

(56) References cited:
- US-A1- 2003 187 666

## Description

The invention disclosed herein relates generally to systems and methods for dispensing evidence of postage payment, and more particularly to online postage dispensing systems in which multiple servers can share the same postal security device.

Postage metering systems generate encrypted information that is printed on a mail piece as part of an indicium evidencing postage payment. The encrypted information includes a postage value for the mail piece combined with other postal data that relate to the mail piece and the postage meter printing the indicium. The encrypted information authenticates and protects the integrity of information, including the postage value, imprinted on the mail piece for later verification of postage payment. Since the indicium incorporates the encrypted information relating to the evidencing of postage payment, altering the printed information in an indicium is detectable by standard verification procedures.

US 2003/0187666 A1 discloses the generation of secure compact indicia without the need for cryptographically generated identifiers such as digital signatures in the indicia. A unique serial number is assigned to each indicium, the serial number is incorporated into the indicium, and additional information is stored. This additional information includes what is referred to as "other required information", which is information specified to be sufficient to verify the indicium, and is ultimately stored at a different location from the location where the indicium request initiated. Verification occurs by comparing the required indicium content (serial number and other required information) with the previously stored version of the required indicium content.

The United States Postal Service ("USPS") has approved personal computer (PC) postage metering systems as part of the USPS Information-Based Indicia Program ("IBIP"). One type of system that supports PC postage metering systems utilizes a postal security device ("PSD"), which is a secure processor-based accounting that dispenses and accounts for postal value stored therein, that is coupled to a server at a data center that is remote from the PC and accessible through the Internet. The PC runs application software or a web browser for requesting postage indicia from the server located at the data center. All functions required for generating an indicium are performed by the PSD coupled to the server, and the results are returned to the PC where the indicium can be printed on a mail piece or label.

Since a PSD can only handle a single transaction at a time, it is necessary to provide multiple PSD's to handle transaction requests from multiple users simultaneously. Thus, a server can have multiple PSD's coupled to it such that each PSD can handle a different transaction simultaneously. When a customer requests a postage indicium, the customer records, including register values that indicate funds available to the customer for printing postage, are sent to a designated PSD for processing of the transaction, and the results returned to the PC being used by the customer.

Having each PSD coupled directly to the server can lead to several issues, however. One major concern is failure of the server, which will result in each of the PSD's that are coupled to the server being rendered inoperable. Typically, redundant servers would be provided such that functionality of one server can be transferred to a backup server in the event of a server failure. When a PSD is coupled to a server, it is unable to be transferred to a backup server in the event of a server failure without having to physically detach the PSD and physically couple it to the backup server. Furthermore, once a PSD has been initialized for a specific customer, it is not possible to transfer the customer account information to a different PSD without possibly losing information and funds in the customer account.

According to the present invention, there is provided a postage dispensing system as set out in Claim 1.

The present invention also provides a method for dispensing evidence of postage payment as set out in Claim 6.

The accompanying drawings illustrate presently preferred embodiments of the invention, and together with the general description given above and the detailed description given below, by way of example serve to explain the invention in more detail. As shown throughout the drawings, like reference numerals designate like or corresponding parts.
FIG. 1 illustrates in block diagram form a system according to an embodiment of the present invention;
FIG. 2 illustrates in block diagram form an interface device according to an embodiment of the present invention;
FIG. 3 illustrates in flow diagram form the operation of the system of Fig. 1; and
FIG. 4 illustrates in block diagram form a PSD chassis according to an embodiment of the present invention.

In the following, there is described a system and method that allows a PSD to be physically shared by multiple servers such that if a manual intervention or moving of the PSD and without risking loss of data from the PSD. This is accomplished by using an interface device to interface the PSD to a system level bus that allows for multiple initiators. An initiator is any server that can access and issue commands over the system level bus to access the PSD. One such type of bus that allows for multiple initiators can be, for example, a Small Computer System Interface (SCSI) bus. Adding a SCSI bus interface to a PSD will allow the PSD to be shared by multiple servers. When one of the servers fails, the functionality of the server can be rolled to a backup server which will be able to access the PSD over the SCSI bus.

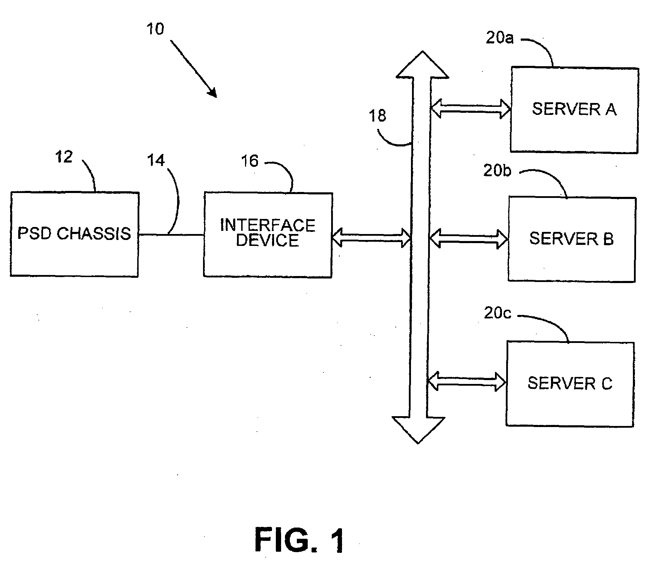

In describing the present invention, reference is made to the drawings, wherein there is seen in Fig. 1 in block diagram form a system 10 according to an embodiment of the present invention. System 10 includes a PSD chassis 12 which holds a plurality of PSD's. The PSD chassis 12 is coupled to an interface device 16 via communication link 14. Interface device 16 is coupled to a system level bus 18. Bus 18 allows for multiple initiators. An initiator is a server that can access and issue commands over the bus 18 to access the PSD chassis 12. Bus 18 could be, for example, a Small Computer System Interface (SCSI) bus. A plurality of servers, e.g., server 20a, 20b, 20c, are also coupled to the bus 18. Each of the servers 20a, 20b, 20c includes one or more processing units for processing data and managing centralized data storage and network communications. While Fig. 1 illustrates three servers, it should be understood that any number of servers can be provided. Each of the servers 20a, 20b, 20c also acts as an initiator as defined above. The interface device 16 allows the PSD chassis 12 to be shared by the servers 20a, 20b, 20c. The servers 20a, 20b, 20c can be accessed via a network (not shown) such as, for example, the Internet, by a user operating a processing device, e.g., personal computer, tablet, or the like.

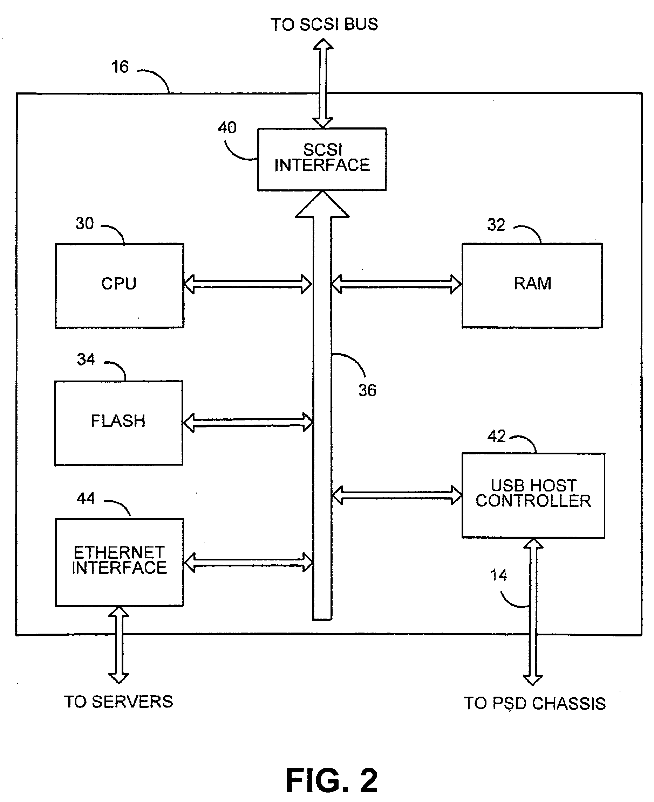

Fig. 2 illustrates in block diagram form an example of an interface device 16 according to an embodiment of the present invention. Interface device 16 includes a central processing unit 30 to control operation of the interface device 16. The CPU 30 can by any type of special or general purpose processing device that utilizes programs and data stored in one or more memories, e.g., RAM 32 and Flash 34, to operate. Each of the CPU 30 and memories 32, 34 communicates via a standard computer bus 36. The bus 36 is coupled to a SCSI interface 40 that allows the interface device 16 to communicate with other devices, e.g., servers 20a, 20b, 20c, via the SCSI bus 18. Optionally, the interface device 16 can include an Ethernet interface controller 44 which can be used in lieu of or in addition to the SCSI interface 40 to allow the interface device 16 to communicate with other devices, e.g., servers 20a, 20b, 20c, via an Ethernet connection. The interface device 16 further includes a USB Host Controller 42 that is coupled to the computer bus 36 and allows for connection to the PSD chassis 12 via communication link 14. The PSD's are preferably USB 1.1 devices, and therefore the communication link 14 is preferably a USB connection.

The CPU 30 executes the requests to USB devices that are coupled to the interface device 16. This involves implementation of the SCSI protocol as well as the protocol used over the ethernet interface 44, such as, for example, iSCSI. The CPU 30 will run an operating system or kernel which will provide TCP/IP network support as well as a USB stack which will provide the required function support needed by USB devices. In addition the operating system or kernel will implement the SCSI protocol which will provide the interface functionality required by the SCSI interface 40.

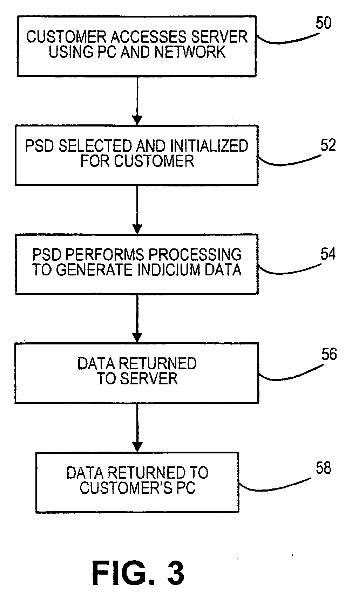

The operation of the system 10 is illustrated in flow diagram form in Fig. 3. In step 50, a user wishing to obtain an indicium that evidences payment of postage utilizes a personal computer or the like connected to a network, e.g., the Internet, to access the server 20a and request the server 20a to dispense the indicium. This can be done, for example using a web browser on the personal computer to access web pages hosted by the server 20a. Upon successful verification of the user and retrieval of the user's account information (stored in a database (not shown) accessed by the server 20a), a PSD from the PSD chassis 12 is selected to perform the necessary operations to generate an indicium and the customer account information is provided to the selected PSD in the PSD chassis 12 via the bus 18, interface device 16, and communication link 14. In step 54 the selected PSD is initialized with the customer account information and the PSD and server 20a perform the processing necessary to generate indicium data. In step 56, the indicium data generated by the PSD is returned to the server 20a (or a back-up server as may be necessary) via the communication link 14, interface device 16, and bus 18. In step 58, the indicium data is processed by the server 20a and then sent from the server 20a to the user's personal computer via the network, e.g. the Internet, where it can be printed on a mail piece or label. Since the interface device 16 allows the PSD chassis 12 to be shared by each of the servers 20a, 20b, 20c, in the event of a failure of the server 20a at any point during the processing described above, the functions of the server 20a can be rolled over to any of the other servers, e.g., server 20b or 20c, without having to move the PSD chassis 12 or any other manual intervention, as the back-up server can access the PSD chassis 12 through the bus 18 and interface device 16.. Additionally, because the customer account information does not need to be transferred to a different PSD, there is no risk of losing any data or of the data becoming corrupted during a transfer.

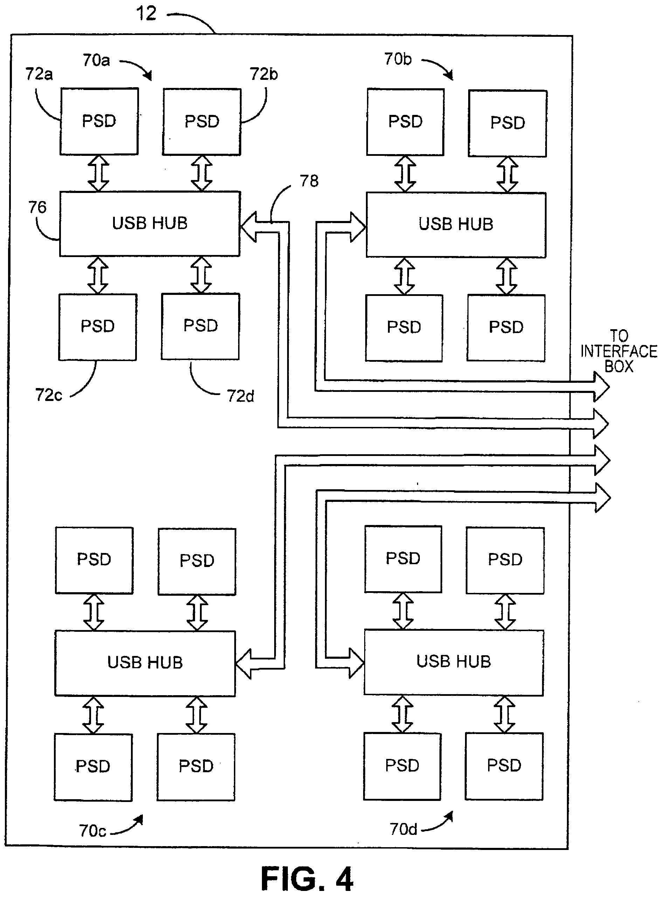

Fig. 4 illustrates in block diagram form an example of a PSD chassis 16 according to an embodiment of the present invention. As illustrated in Fig. 4, PSD chassis 12 includes four groups 70a, 70b, 70c, 70d of PSDs. Each group 70a-70d includes four different PSD's, e.g., as illustrated group 70a includes PSD's 72a, 72b, 72c, 72d. The PSD's 72a-72d are preferably USB 1.1 devices, and therefore can be coupled to a high speed four port USB Hub 76, which in turn is connected to a USB bus 78 for coupling to the interface device 16. The other groups 70b, 70c and 70d are similar to 70a and the description need not be repeated. Thus, the chassis 12 as illustrated in Fig. 4 includes sixteen different PSD's, each of which can be accessed by any one of the servers 20a, 20b, 20c via the interface device 16 and bus 18 without having to manually remove the chassis 12 and reconnect it to the new server and without having to transfer any of the data from one PSD to another. It should be understood that while Fig. 4 illustrates the PSD chassis 12 as containing four groups of four PSD's each, the PSD chassis 12 is not so limited and can be provided with any number of groups and any number of PSD's in each group as desired.

While preferred embodiments of the invention have been described and illustrated above, it should be understood that they are exemplary of the invention and are not to be considered as limiting. Additions, deletions, substitutions, and other modifications can be made without departing from the scope of the present invention. Accordingly, the invention is not to be considered as limited by the foregoing description but is only limited by the scope of the appended claims.

## Claims

1. A postage dispensing system for dispensing evidence of postage payment via a network to a remote processing device, the system comprising:
a system level bus (18);
a plurality of servers (20a, 20b, 20c) coupled to the system level bus, each of the servers acting as an initiator on the system level bus, the servers accessible by remote processing devices via the network;
an interface device (16) coupled to the system level bus (18); and
a chassis (12) holding a plurality of postal security devices (72a, 72b, 72c, 72d), the chassis (12) coupled to the interface device (16), wherein each of the plurality of postal security devices can be accessed by each of the plurality of servers via the interface device and system level bus,
wherein the system is configured to operate such that:
when a first one of the plurality of servers receives a request for a postage indicium via the network from a user using a remote processing device, the first one of the plurality of servers verifies the user, retrieves user account information for the user, selects one of the plurality of postal security devices to generate an indicium, and provides the user account information to the selected one of the plurality of postal security devices via the interface device for initializing the selected one of the postal security devices with the user account information, and the selected one of the plurality of postal security devices generates indicium data and returns the generated indicium data to the first one of the plurality of servers for processing and sending to the remote processing device via the network,
if the first one of the plurality of servers fails during processing of the request for the postage indicium, a second one of the plurality of servers is utilized as a backup server to access the selected one of the postal security devices via the interface device and system level bus without having to move the selected one of the plurality of postal security devices or transfer the user account information from the selected one of the plurality of postal security devices to a different postal security device.

2. The postage dispensing system of claim 1, wherein the system level bus (18) is a small computer system interface (SCSI) bus.

3. The postage dispensing system of claim 1 or 2, wherein the plurality of postal security devices are coupled to the interface device via a USB connection (42, 76).

4. The postage dispensing system of claim 1, 2 or 3, wherein the interface device (16) further comprises:
a processing unit (30); and
a memory device (32, 34) coupled to the processing unit (30).

5. The postage dispensing system of claim 4, wherein the interface device further comprises:
an Ethernet interface (44) to provide connection to each of the plurality of servers via an Ethernet.

6. A method for dispensing evidence of postage payment, in a postage dispensing system for dispensing evidence of postage payment via a network to a remote processing device, the postage dispensing system comprising a system level bus (18), a plurality of servers (20a, 20b, 20c) coupled to the system level bus, each of the servers acting as an initiator on the system level bus, and the servers being accessible by remote processing devices via the network, an interface device (16) coupled to the system level bus, and a chassis (12) holding a plurality of postal security devices (72a, 72b, 72c, 72d), the chassis coupled to the interface device, wherein each of the plurality of postal security devices can be accessed by each of the plurality of servers via the interface device and system level bus, the method comprising:
receiving, at a first one of the plurality of servers (20a, 20b, 20c), a request via the network from a customer using a remote processing device for an indicium that evidences payment of postage;
the first one of the plurality of servers verifying the customer and retrieving customer account information for the customer;
the first one of the plurality of servers selecting one of the plurality of postal security devices (72a, 72b, 72c, 72d) to generate an indicium ;
the first one of the plurality of servers providing the customer account information to the selected one of the plurality of postal security devices via the interface device (16) to initialize the selected one of the plurality of postal security devices;
the selected one of the postal security devices generating indicium data and returning the indicium data to the first one of the plurality of servers;
the first one of the plurality of servers returning the indicium data to the remote processing device used by the customer,
and the method further comprising:
when the first one of the plurality of servers malfunctions during processing of the request, a second one of the plurality of servers coupled to the system level bus accesses the selected postal security device via the interface device to perform processing of the request without having to move the selected one of the plurality of postal security devices or transfer the customer account information from the selected one of the plurality of postage security devices to a different postal security device.

7. The method of claim 6, wherein the system level bus (18) is a small computer system interface (SCSI) bus.

8. The method of claim 6, wherein the plurality of postal security devices are coupled to the interface device via a USB connection (42).

## Patentansprüche

1. Portoausgabesystem zum Ausgeben eines Nachweises einer Portozahlung über ein Netzwerk an eine Fernverarbeitungsvorrichtung, wobei das System umfasst:
einen Systemebenenbus (18);
eine Vielzahl von Surfern (20a, 20b, 20c), die mit dem Systemebenenbus gekoppelt sind, wobei jeder der Server als ein Initiator auf dem Systemebenenbus agiert, wobei die Server von Fernverarbeitungsvorrichtungen über das Netzwerk zugreifbar sind;
eine Schnittstellenvorrichtung (16), die mit dem Systemebenenbus (18) gekoppelt ist;
ein Chassis (12), das eine Vielzahl von Postsicherheitsvorrichtungen (72a, 72b, 72c, 72d) hält, wobei das Chassis (12) mit der Schnittstellenvorrichtung (16) gekoppelt ist, wobei auf jede der Vielzahl von Postsicherheitsvorrichtungen von jeder der Vielzahl von Servern über die Schnittstellenvorrichtung und den Systemebenenbus zugegriffen werden kann,
wobei das System eingerichtet ist, zu arbeiten, sodass:
wenn ein erster der Vielzahl von Servern eine Anfrage für ein Portoindikium über das Netzwerk von einem eine Fernverarbeitungsvorrichtung verwendenden Benutzer empfängt, der erste der Vielzahl von Servern den Benutzer verifiziert, eine Benutzerkontoinformation für den Benutzer abfragt, eine der Vielzahl von Postsicherheitsvorrichtungen zum Erzeugen eines Indikiums auswählt und der Ausgewählten der Vielzahl von Postsicherheitsvorrichtungen über die Schnittstellenvorrichtung zum Initialisieren der Ausgewählten der Postsicherheitsvorrichtungen mit der Benutzerkontoinformation die Benutzerkontoinformation bereitstellt, und die Ausgewählte der Vielzahl von Postsicherheitsvorrichtungen Indikiumdaten erzeugt und die erzeugten Indikiumdaten an den ersten der Vielzahl von Servern zum Verarbeiten und Senden an die Fernverarbeitungsvorrichtung über das Netzwerk zurückgibt,
falls der erste der Vielzahl von Servern während eines Verarbeitens der Anfrage für das Portoindikium fehlschlägt, ein zweiter der Vielzahl von Servern als Backupserver verwendet wird, um auf die Ausgewählte der Postsicherheitsvorrichtungen über die Schnittstellenvorrichtung und den Systemebenenbus zu zugreifen, ohne die Ausgewählte der Vielzahl von Postsicherheitsvorrichtungen bewegen zu müssen oder die Benutzerkontoinformation von der Ausgewählten der Vielzahl von Postsicherheitsvorrichtungen zu einer anderen Postsicherheitsvorrichtung transferieren zu müssen.

2. Portoausgabesystem nach Anspruch 1, wobei der Systemebenenbus (18) ein Kleincomputersystemschnittstellen (SCSI)-Bus ist.

3. Portoausgabesystem nach Anspruch 1 oder 2, wobei die Vielzahl von Postsicherheitsvorrichtungen mit der Schnittstellenvorrichtung über eine USB-Verbindung (42, 76) gekoppelt ist.

4. Portoausgabesystem nach Anspruch 1, 2 oder 3, wobei die Schnittstellenvorrichtung (16) weiterhin umfasst:
eine Verarbeitungseinheit (30); und
eine Speichervorrichtung (32, 34), die mit der Verarbeitungseinheit (30) gekoppelt ist.

5. Portoausgabesystem nach Anspruch 4, wobei die Schnittstellenvorrichtung weiterhin umfasst:
eine Ethernet-Schnittstelle (44) zum Bereitstellen einer Verbindung zu jeder der Vielzahl von Servern über Ethernet.

6. Verfahren zum Ausgeben eines Nachweises einer Portozahlung in einem Portoausgabesystem zum Ausgeben eines Nachweises einer Portozahlung über ein Netzwerk an eine Fernverarbeitungsvorrichtung, wobei das Portoausgabesystem umfasst einen Systemebenenbus (18), eine Vielzahl von Servern (20a, 20b, 20c), die mit dem Systemebenenbus gekoppelt sind, wobei jeder der Server als ein Initiator auf dem Systemebenenbus agiert und die Server von Fernverarbeitungsvorrichtungen über das Netzwerk zugreifbar sind, eine Schnittstellenvorrichtung (16), die mit dem Systemebenenbus gekoppelt ist, und ein Chassis (12), das eine Vielzahl von Postsicherheitsvorrichtungen (72a, 72b, 72c, 72d) hält, wobei das Chassis (12) mit der Schnittstellenvorrichtung (16) gekoppelt ist, wobei auf jede der Vielzahl von Postsicherheitsvorrichtungen von jeder der Vielzahl von Servern über die Schnittstellenvorrichtung und den Systemebenenbus zugegriffen werden kann, wobei das Verfahren umfasst:
Empfangen, an ersten der Vielzahl von Servern (20a, 20b, 20c), einer Anfrage über das Netzwerk von einem Kunden unter Verwendung einer Fernverarbeitungsvorrichtung für ein Indikium, das Zahlung von Porto nachweist;
der erste der Vielzahl von Servern verifiziert den Kunden und fragt Kundenkontoinformation für den Kunden ab;
der erste der Vielzahl von Servern wählt eine der Vielzahl von Postsicherheitsvorrichtungen (72a, 72b, 72c, 72d) zum Erzeugen eines Indikiums aus;
der erste der Vielzahl von Servern stellt die Kundenkontoinformation für die Ausgewählte der Vielzahl von Postsicherheitsvorrichtungen über die Schnittstellenvorrichtung (16) bereit, um die Ausgewählte der Vielzahl von Postsicherheitsvorrichtungen zu initialisieren;
die Ausgewählte der Postsicherheitsvorrichtungen erzeugt Indikiumdaten und gibt die Indikiumdaten an den ersten der Vielzahl von Servern zurück;
der erste der Vielzahl von Servern gibt die Indikiumdaten an die von dem Kunden verwendete Fernverarbeitungsvorrichtung zurück,
und das Verfahren umfasst weiterhin:
wenn der erste der Vielzahl von Servern während eines Verarbeitens der Anfrage nicht funktioniert, ein zweiter der Vielzahl von Servern, gekoppelt mit dem Systemebenenbus, auf die ausgewählte Postsicherheitsvorrichtung über die Schnittstellenvorrichtung zugreift, um eine Verarbeitung der Anfrage durchzuführen, ohne die Ausgewählte der Vielzahl von Postsicherheitsvorrichtungen bewegen zu müssen oder die Kundenkontoinformation von der Ausgewählten der Vielzahl von Postsicherheitsvorrichtungen zu einer anderen Postsicherheitsvorrichtung transferieren zu müssen.

7. Verfahren nach Anspruch 6, wobei der Systemebenenbus (18) ein Kleincomputersystemschnittstellen (SCSI)-Bus ist.

8. Verfahren nach Anspruch 6, wobei die Vielzahl von Postsicherheitsvorrichtungen mit der Schnittstellenvorrichtung über eine USB-Verbindung (42) verbunden sind.

## Revendications

1. Système de distribution d'affranchissement pour distribuer une preuve de paiement d'affranchissement via un réseau à un dispositif de traitement à distance, le système comprenant :
un bus de niveau système (18) ;
une pluralité de serveurs (20a, 20b, 20c) couplés au bus de niveau système, chacun des serveurs jouant le rôle d'un initiateur sur le bus de niveau système, les serveurs étant accessibles par des dispositifs de traitement à distance via le réseau ;
un dispositif d'interface (16) couplé au bus de niveau système (18) ; et
un châssis (12) contenant une pluralité de dispositifs de sécurité postaux (72a, 72b, 72c, 72d), le châssis (12) étant couplé au dispositif d'interface (16), chacun de la pluralité de dispositifs de sécurité postaux pouvant être accédé par chacun de la pluralité de serveurs via le dispositif d'interface et le bus de niveau système,
le système étant configuré pour fonctionner de sorte que :
lorsqu'un premier de la pluralité de serveurs reçoit une demande pour un indice d'affranchissement via le réseau en provenance d'un utilisateur utilisant un dispositif de traitement à distance, le premier de la pluralité de serveurs vérifie l'utilisateur, récupère des informations de compte d'utilisateur pour l'utilisateur, sélectionne un de la pluralité de dispositifs de sécurité postaux pour générer un indice, et fournit les informations de compte d'utilisateur au dispositif sélectionné de la pluralité de dispositifs de sécurité postaux via le dispositif d'interface pour initialiser le dispositif sélectionné des dispositifs de sécurité postaux avec les informations de compte d'utilisateur, et le dispositif sélectionné de la pluralité de dispositifs de sécurité postaux génère des données d'indice et retourne les données d'indice générées au premier de la pluralité de serveurs pour le traitement et l'envoi au dispositif de traitement à distance via le réseau,
si le premier de la pluralité de serveurs connaît une défaillance pendant le traitement de la demande pour l'indice d'affranchissement, un second de la pluralité de serveurs est utilisé comme un serveur de secours pour accéder au dispositif sélectionné dès dispositifs de sécurité postaux via le dispositif d'interface et le bus de niveau système sans avoir à déplacer le dispositif sélectionné de la pluralité de dispositifs de sécurité postaux ou transférer les informations de compte d'utilisateur du dispositif sélectionné de la pluralité de dispositifs de sécurité postaux à un dispositif de sécurité postal différent.

2. Système de distribution d'affranchissement selon la revendication 1, dans lequel le bus de niveau système (18) est un bus de petite interface de système informatique (SCSI).

3. Système de distribution d'affranchissement selon la revendication 1 ou 2, dans lequel la pluralité de dispositifs de sécurité postaux sont couplés au dispositif d'interface via une connexion USB (42, 76).

4. Système de distribution d'affranchissement selon la revendication 1, 2 ou 3, dans lequel le dispositif d'interface (16) comprend en outre :
une unité de traitement (30) ; et
un dispositif de mémoire (32, 34) couplé à l'unité de traitement (30).

5. Système de distribution d'affranchissement selon la revendication 4, dans lequel le dispositif d'interface comprend en outre :
une interface Ethernet (44) pour fournir une connexion à chacun de la pluralité de serveurs via un Ethernet.

6. Procédé pour distribuer une preuve de paiement d'affranchissement dans un système de distribution d'affranchissement pour distribuer une preuve de paiement d'affranchissement via un réseau à un dispositif de traitement à distance, le système de distribution d'affranchissement comprenant un bus de niveau système (18), une pluralité de serveurs (20a, 20b, 20c) couplés au bus de niveau système, chacun des serveurs jouant le rôle d'un initiateur sur le bus de niveau système, et les serveurs étant accessibles par des dispositifs de traitement à distance via le réseau, un dispositif d'interface (16) couplé au bus de niveau système, et un châssis (12) contenant une pluralité de dispositifs de sécurité postaux (72a, 72b, 72c, 72d), le châssis étant couplé au dispositif d'interface, chacun de la pluralité de dispositifs de sécurité postaux pouvant être accédé par chacun de la pluralité de serveurs via le dispositif d'interface et le bus de niveau système, le procédé comprenant :
la réception, au niveau d'un premier de la pluralité de serveurs (20a, 20b, 20c), d'une demande via le réseau en provenance d'un client utilisant un dispositif de traitement à distance pour un indice qui prouve le paiement d'affranchissement ;
le premier de la pluralité de serveurs vérifiant le client et récupérant des informations de compte de client pour le client ;
le premier de la pluralité de serveurs sélectionnant un de la pluralité de dispositifs de sécurité postaux (72a, 72b, 72c, 72d) pour générer un indice ;
le premier de la pluralité de serveurs fournissant les informations de compte de client au dispositif sélectionné de la pluralité de dispositifs de sécurité postaux via le dispositif d'interface (16) pour initialiser le dispositif sélectionné de la pluralité de dispositifs de sécurité postaux ;
le dispositif sélectionné des dispositifs de sécurité postaux générant des données d'indice et retournant les données d'indice au premier de la pluralité de serveurs ;
le premier de la pluralité de serveurs retournant les données d'indice au dispositif de traitement à distance utilisé par le client,
et le procédé comprenant en outre :
lorsque le premier de la pluralité de serveurs connaît un dysfonctionnement pendant le traitement de la demande, un second de la pluralité de serveurs couplés au bus de niveau système accède au dispositif de sécurité postal sélectionné via le dispositif d'interface pour effectuer le traitement de la demande sans avoir à déplacer le dispositif sélectionné de la pluralité de dispositifs de sécurité postaux ou transférer les informations de compte de client du dispositif sélectionné de la pluralité de dispositifs de sécurité postaux à un dispositif de sécurité postal différent.

7. Procédé selon la revendication 6, dans lequel le bus de niveau système (18) est un bus de petite interface de système informatique (SCSI).

8. Procédé selon la revendication 6, dans lequel la pluralité de dispositifs de sécurité postaux sont couplés au dispositif d'interface via une connexion USB (42).
